# EUROPEAN PATENT APPLICATION

(11) **EP 4 286 925 A1**
(43) Date of publication of application: **06.12.2023**
(21) Application number: 23177012.4
(22) Date of filing: 02.06.2023
(51) Int. Cl.: G02F 1/01, H01S 3/115, H01S 3/117, H01S 3/0941

(54) **TUNABLE Q-SWITCHED LASER USING OSC MODULATOR**

(30) Priority: 03.06.2022 US 202263348580 P; 04.04.2023 US 202318295297
(71) Applicant: Meta Platforms Technologies, LLC, Menlo Park, CA 94025 (US)
(72) Inventor: OUDERKIRK, Andrew John, Menlo Park, 94025 (US); MALHOTRA, Tanya, Menlo Park, 94025 (US); RAO, Tingling, Menlo Park, 94025 (US); VADIEE, Ehsan, Menlo Park, 94025 (US)
(74) Representative: Murgitroyd & Company

(57) **Abstract**

A device includes an active laser medium operative to emit spatially coherent light of a predetermined wavelength along an optical axis, first and second mirrors aligned with the optical axis and defining a resonant cavity enclosing the active laser medium, and a modulator including an organic solid crystal disposed along the optical axis between the first and second mirrors and configured to change a polarization state of the emitted light.

## Description

### TECHNICAL FIELD

The present disclosure is directed to organic solid crystal-modified devices and systems, and their methods of manufacture.

### BACKGROUND OF THE DISCLOSURE

In example laser devices and systems, Q-switching refers to the formation of output pulses with high energy, high repetition rate, and narrow linewidth, which can be suitable for different applications including imaging, sensing, and ranging. That is, Q-switching may be regarded as a technique by which a laser can be made to produce a pulsed output beam with extremely high peak power. Such an output may be achieved by locating a variable modulator inside the optical resonant cavity of a laser, which may change the Q-factor of the resonator by changing the state of feedback of light into the laser gain medium.

When the modulator is functioning, light that leaves the gain medium does not return, and lasing does not occur. This attenuation inside the cavity corresponds to a decrease in the Q factor or quality factor of the optical resonator. A high Q factor corresponds to low resonator losses per roundtrip and vice versa. The variable modulator may be referred to as a "Q-switch."

### SUMMARY OF THE DISCLOSURE

In accordance with a first aspect of the present disclosure, there is provided a device comprising: an active laser medium operative to emit spatially coherent light of a predetermined wavelength along an optical axis; first and second mirrors aligned with the optical axis and defining a resonant cavity enclosing the active laser medium; and a modulator comprising an organic solid crystal disposed along the optical axis between the first and second mirrors and configured to change a polarization state of the emitted light.

In some embodiments, the active laser medium may comprise an ion-doped glass or an ion-doped crystalline solid.

In some embodiments, the first mirror may comprise a planar mirror having a reflectivity of at least approximately 95%.

In some embodiments, the second mirror may comprise a non-planar output coupler having a reflectivity of less than 100%.

In some embodiments, the first mirror may comprise a planar mirror having a reflectivity of at least approximately 95%, the second mirror comprises an output coupler having a reflectivity of less than 100%, and the modulator is disposed between the active laser medium and the output coupler.

In some embodiments, the modulator may comprise an electro-optic modulator.

In some embodiments, the device may further comprise: a primary electrode disposed over a first surface of the organic solid crystal; and a secondary electrode at least partially overlapping the primary electrode and disposed over a second surface of the organic solid crystal opposite to the first surface.

In some embodiments, the modulator may comprise an acousto-optic modulator.

In some embodiments, the organic solid crystal may comprise a non-centrosymmetric crystal.

In some embodiments, the organic solid crystal may comprise a birefringent crystal.

In some embodiments, the organic solid crystal may comprise a single crystal.

In some embodiments, the organic solid crystal may comprise a polyacene compound.

In some embodiments, the organic solid crystal may comprise a polycyclic aromatic hydrocarbon selected from the group consisting of anthracene, naphthalene, tetracene, and pentacene.

In accordance with a further aspect of the present disclosure, there is provided a Q-switched laser comprising: a resonant cavity having a pair of reflective surfaces located along an optical axis; an active laser medium disposed along the optical axis within the resonant cavity; and a Q-switch disposed on the optical axis within the resonant cavity, wherein the Q-switch comprises an organic solid crystal.

In some embodiments, the pair of reflective surfaces may respectively comprise a planar mirror and a non-planar output coupler, and the Q-switch is located between the active laser medium and the output coupler.

In accordance with a further aspect of the present disclosure, there is provided a method comprising: forming first and second mirrors along an optical axis to define a resonant cavity enclosing an active laser medium; forming a modulator comprising an organic solid crystal along the optical axis within the resonant cavity; operatively coupling a power supply to the resonant cavity to pump the active laser medium; forming pulsed output light from the pumped active laser medium; actuating the modulator; and passing the pulsed output light through the actuated modulator to form a modulated light beam.

In some embodiments, actuating the modulator may comprise applying a voltage across the organic solid crystal along a direction orthogonal to the optical axis.

In some embodiments, actuating the modulator may comprise applying an RF field to the organic solid crystal.

In some embodiments, the modulated light beam may comprise an amplitude-modulated pulsed wave.

In some embodiments, the modulated light may comprise circularly polarized light.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The accompanying drawings illustrate a number of exemplary embodiments and are a part of the specification. Together with the following description, the drawings demonstrate and explain various principles of the present disclosure.
FIG. 1 shows a laser configuration including an electro-optic modulator (EOM) operative with a Q-switching mechanism according to some embodiments.
FIG. 2 shows a laser configuration including an acousto-optic modulator (AOM) with a Q-switching mechanism according to certain embodiments.
FIG. 3 is an illustration of exemplary augmented-reality glasses that may be used in connection with embodiments of this disclosure.
FIG. 4 is an illustration of an exemplary virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

In example laser devices and systems, Q-switching refers to the formation of output pulses with high energy, high repetition rate, and narrow linewidth, which can be suitable for different applications including imaging, sensing, and ranging. That is, Q-switching may be regarded as a technique by which a laser can be made to produce a pulsed output beam with extremely high peak power. Such an output may be achieved by locating a variable modulator inside the optical resonant cavity of a laser, which may change the Q-factor of the resonator by changing the state of feedback of light into the laser gain medium.

When the modulator is functioning, light that leaves the gain medium does not return, and lasing does not occur. This attenuation inside the cavity corresponds to a decrease in the Q factor or quality factor of the optical resonator. A high Q factor corresponds to low resonator losses per roundtrip and vice versa. The variable modulator may be referred to as a "Q-switch."

Whereas saturable absorbers in passive Q-switched devices can increase the repetition rate, they typically have low pulse energy and wide pulse duration compared to their active counterparts due to their lack of external triggering. This is because the reduced pulse energy leads to a weaker modulation of the net gain, and thus to a slower rise and decay of the optical power. Active Q-switching, on the other hand, may be implemented through an externally controlled variable modulator. An optical modulator can be understood in different instantiations, including a magneto-optic modulator (MOM), an electro-optic modulator (EOM) such as a Pockels cell or Kerr cell, or an acousto-optic modulator (AOM).

To achieve high switching speeds and narrow pulse width, the polarization state of the light of the resonator can be modified via electro-optic or acousto-optic effects. Refractive index modulation of an EOM or AOM may utilize high applied voltage/RF power with optimal crystal orientation and electric field direction. In some approaches, EOM Q-switched laser cavities may include crystals with high birefringence tunability.

Using organic solid crystals (OSCs) having a high degree of birefringence tunability may enable the realization of highly integrated, high power, and high repetition rate Q-switched lasers. Organic solid crystals may present a unique uniaxial or biaxial crystal structure in which the birefringence can be actively tuned repeatedly with high speed. In addition, the use of OSCs can reduce the overall thickness/size of optical elements.

According to example embodiments, Q-switching may be derived by using an OSC as an active modulator. A modulator containing an organic solid crystal may be configured to change the polarization state of light passing through the organic solid crystal in response to (i) an applied voltage, (ii) an RF signal, or (iii) a preferential mechanical orientation of the crystalline phase.

During operation, a voltage may be applied to an OSC modulator in an amount effective to change a refractive index of the organic solid crystal material along at least one axis by at least approximately 0.01, e.g., 0.01, 0.02, 0.05, 0.1, or 0.2, including ranges between any of the foregoing values.

An electro-optic modulator may modulate the polarization state of the laser beam. The EOM may include a birefringent OSC material. The OSC may be implemented as a waveplate (e.g., quarter or half waveplate) to dynamically switch the polarization state of the laser. This can reduce the complexity of the Q-switched laser cavity structure, and may obviate the need for other types of polarizers or waveplates.

For an EOM configuration, the OSC may change the state of polarization temporally and/or spatially, depending on the input voltage profile. Based on the polarization response of the OSC, light can be amplified in the gain medium and lead to the Q-switching mechanism. Based on the polarization response of the OSC, the light intensity can also be modulated to generate an amplitude-modulated pulsed wave (AMPW).

An acousto-optic modulator can modulate the polarization state of a laser beam. The AOM may include a birefringent OSC material. The OSC can be used as a polarization selective deflector to dynamically deflect one polarization state preferentially with respect to another polarization state. The AOM can be combined with an EOM to increase the deflection of one polarization state more effectively.

For an AOM configuration, an OSC-based modulator can change the state of polarization temporally and/or spatially, depending on the input RF profile. As with EOM configurations, based on the polarization response of the OSC, the light intensity can be modulated to form an amplitude-modulated pulsed wave (AMPW). An OSC-based electro-optic modulator or acousto-optic modulator can be integrated into the laser cavity as an external component or integrated into a laser fabrication process. A laser can be a solid-state laser.

Thus, disclosed is an OSC modulator with the ability to change the polarization state of light either with an applied voltage or RF signal, vis-à-vis the preferential mechanical orientation of a crystal plane of an OSC material. OSC-based EOMS and AOMs can be understood in different embodiments in which a change in polarization state is desired. An OSC can be implemented as an EOM and/or an AOM with different configurations and large Kerr and Pockels constants. OSC-based EOMs and AOMs can be used in Q-switched lasers to reduce the size, power consumption, linewidth, and increase peak pulse energy.

The Pockels effect refers to directionally dependent linear variation in the refractive index of an optical medium that occurs in response to the application of an electric field. The Kerr effect is comparable but causes changes in the refractive index at a rate proportional to the square of the applied electric field. According to certain embodiments, the OSC material forming a Q-switch may be characterized by large Kerr and Pockels constants.

In accordance with various embodiments, a device may include an active laser medium operative to emit spatially coherent light of a predetermined wavelength along an optical axis, first and second mirrors aligned with the optical axis and forming a resonant cavity enclosing the active laser medium, and a modulator including an organic solid crystal disposed along the optical axis between the first and second mirrors and configured to change a polarization state of the emitted light.

The modulator may include a primary electrode disposed over a first surface of the organic solid crystal, and a secondary electrode at least partially overlapping the primary electrode and disposed over a second surface of the organic solid crystal opposite to the first surface. An electrode may include any suitably electrically conductive material such as a metal, a transparent conductive oxide (TCO) (e.g., indium tin oxide or indium gallium zinc oxide), or a metal mesh or nanowire matrix (e.g., including metal nanowires or carbon nanotubes).

A power source may be connected to a laser pump for pumping the active laser medium. When stimulated emission is achieved, the resulting laser beam may alternately traverse the resonant cavity between the mirrors and through an OSC-based Q-switch located along the optical axis. By applying a voltage across the OSC Q-switch, a refractive index of the OSC material may be changed, which can alter the optical length of the resonant cavity and hence the output wavelength of the laser.

An active laser medium may include an ion-doped glass or an ion-doped crystalline solid. Examples of materials operable in an active laser medium include Er³⁺:glass (i.e., erbium-doped phosphate glass), Tm³⁺:YLF (i.e., thulium-doped yttrium lithium fluoride), Nd:YAG (i.e., neodymium-doped yttrium aluminum garnet), and Er³⁺:YAG (i.e., erbium-doped yttrium aluminum garnet), although additional natural and synthetic active laser medium crystals are contemplated.

A first mirror may include a planar mirror having a reflectivity of at least approximately 95% while a second mirror may include a non-planar output coupler having a reflectivity of less than 100%. In particular embodiments, the first mirror may include a planar mirror having a reflectivity of at least approximately 95%, the second mirror may include an output coupler having a reflectivity of less than 100%, and the OSC modulator may be disposed between the active laser medium and the output coupler.

Structurally, the disclosed organic solid crystal materials, as well as the modulators derived therefrom, may be single crystal, polycrystalline, or glassy. Organic solid crystals may include closely packed structures (e.g., organic molecules) that exhibit desirable optical properties such as a high and tunable refractive index, and high birefringence. Anisotropic organic solid materials may include a preferred packing of molecules or a preferred orientation or alignment of molecules.

In some embodiments, an organic solid crystal modulator may have three principal indices of refraction, where at least two indices are different from each other (e.g., nₓ = n_{y} ≠ n_{z}, nₓ = n_{z} ≠ n_{y}, n_{y} = n_{z} ≠ nₓ, or nₓ ≠ n_{y} ≠ n_{z}). The organic crystalline phase may be single crystal or polycrystalline. In some embodiments, the organic crystalline phase may include amorphous regions. In some embodiments, the organic crystalline phase may be substantially crystalline.

The organic crystalline phase may be characterized by a refractive index along at least one principal axis of at least approximately 1.5 at 589 nm. By way of example, the refractive index of the organic crystalline phase at 589 nm and along at least one principal axis may be at least approximately 1.5, at least approximately 1.6, at least approximately 1.7, at least approximately 1.8, at least approximately 1.9, at least approximately 2.0, at least approximately 2.1, at least approximately 2.2, at least approximately 2.3, at least approximately 2.4, at least approximately 2.5, or at least approximately 2.6, including ranges between any of the foregoing values.

In some embodiments, the organic crystalline phase may be characterized by a birefringence (Δn), where n₁≠n₂≠n₃, n₁=n₂≠n₃, n₁≠n₂=n₃, or n₁=n₃≠n₂, of at least approximately 0.05, e.g., at least approximately 0.05, at least approximately 0.1, at least approximately 0.2, at least approximately 0.3, at least approximately 0.4, or at least approximately 0.5, including ranges between any of the foregoing values.

One or more source materials may be used to form an organic solid crystal. Example organic materials may include various classes of crystallizable organic semiconductors. In accordance with various embodiments, organic semiconductors may include small molecules, macromolecules, liquid crystals, organometallic compounds, oligomers, and polymers. Organic semiconductors may include p-type, n-type, or ambipolar polycyclic aromatic hydrocarbons, including polyacene compounds such as anthracene, naphthalene, tetracene, pentacene, etc. Example compounds may include cyclic, linear and/or branched structures, which may be saturated or unsaturated, and may additionally include heteroatoms and/or saturated or unsaturated heterocycles, such as furan, pyrrole, thiophene, pyridine, pyrimidine, piperidine, and the like. Heteroatoms may include fluorine, chlorine, nitrogen, oxygen, sulfur, phosphorus, as well as various metals. Example compounds may be crystallographically non-centrosymmetric.

Disclosed are methods and structures where the large birefringence of organic solid crystals may be exploited to actively rotate the polarization state of a laser with a high electro-optic coefficient, low power consumption, low quarter/half-wave voltage, high peak energy, high ease of production, large transparency range within the visible spectrum, and large laser damage threshold.

Example configurations in which an OSC can function as a modulator include electro-optic modulation and/or acousto-optic modulation. In an electro-optic modulator (EOM), the polarization response of the modulator material may be changed with an applied voltage. In an acousto-optic modulator (AOM), the polarization response of the modulator material may be changed with an applied RF signal. EOM and AOM configurations can be implemented according to Kerr and Pockels effects (for non-centrosymmetric crystals). OSC-based modulators can be used in different applications such as Q-switching to produce narrow pulses with high energy. Active tuning of an OSC-based modulator and the attendant tuning of the laser may be used to increase resolution and overall accuracy in sensing applications, such as with self-mixing interferometry (SMI)-based sensing of speed, distance, or vibration.

In further embodiments, active tuning of an OSC-based modulator may be used to beneficially attenuate speckle in applications where a display is illuminated by a laser beam. Examples of such display applications include various 2D scanned displays and transmissive or reflective liquid crystal on silicon (LCoS) micro displays, such as ferroelectric liquid crystal on silicon (FLCoS) displays.

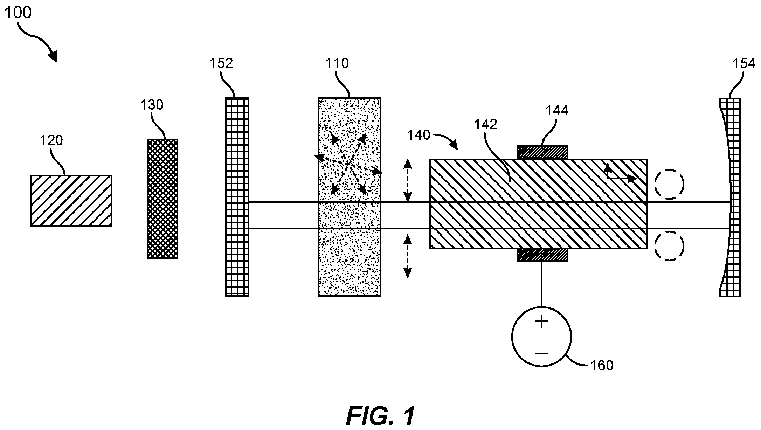

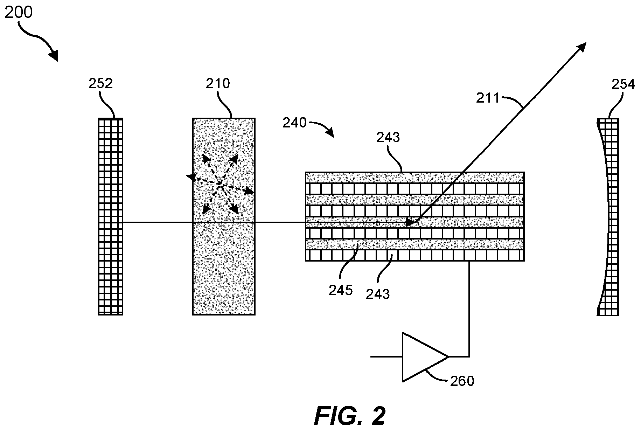

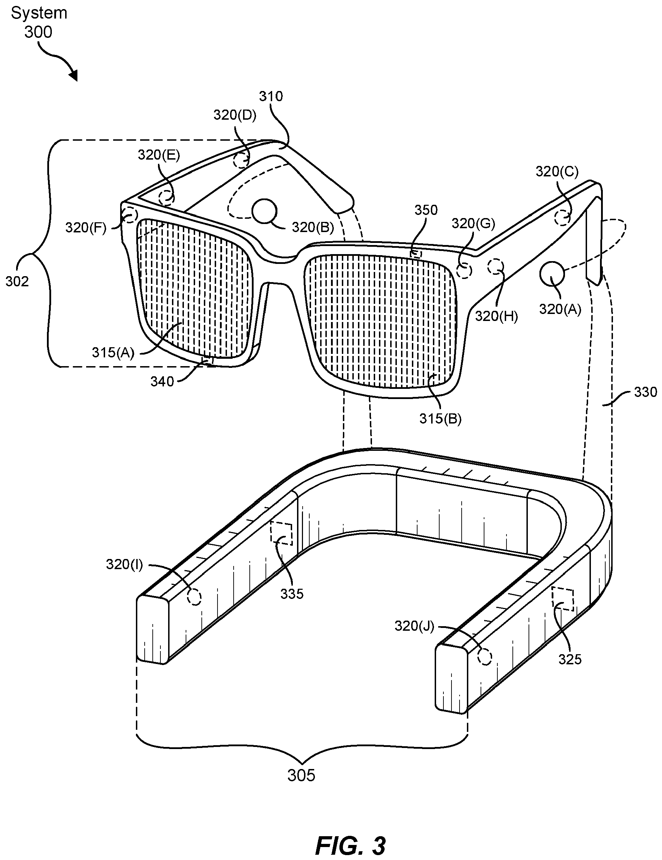

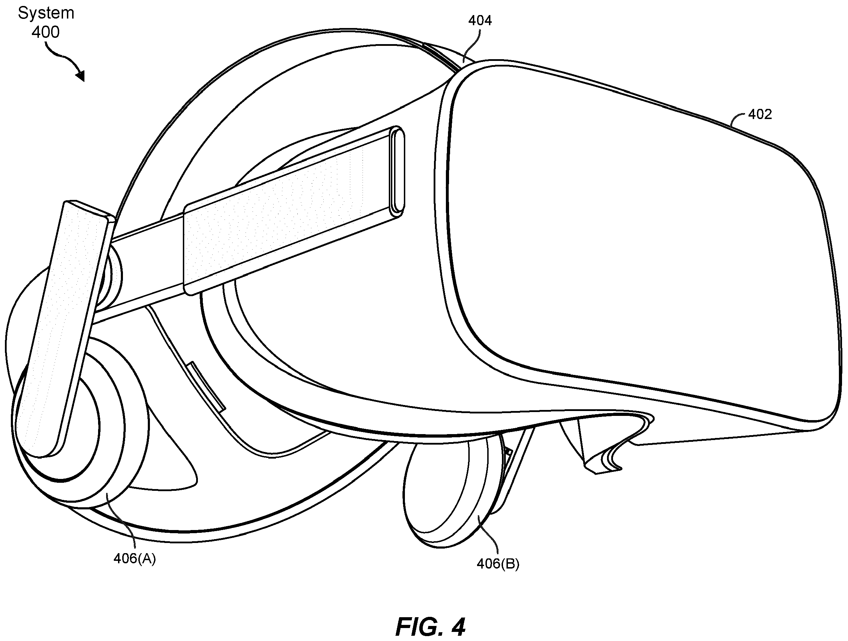

The following will provide, with reference to FIGS. 1-4, a detailed description of organic solid crystal-modified devices and systems, and their methods of manufacture. The discussion associated with FIGS. 1 and 2 relates to example tunable Q-switched laser architectures that include an organic solid crystal (OSC) modulator. The discussion associated with FIGS. 3 and 4 relates to various virtual reality platforms that may include an OSC-modulator driven Q-switched laser as described herein.

FIG. 1 illustrates schematically a solid-state laser 100 including an active laser medium 110, such as a Nd:YAG crystal, pumped by a source 120 including diode lasers and coupled into the active laser medium 110 through a focusing element 130, and an OSC Q-switch 140 located inside a laser cavity defined by mirrors 152, 154. A high voltage source 160 is used to drive the OSC Q-switch 140. The Q-switch 140 includes a birefringent organic solid crystal 142, such as anthracene, and a pair of overlapping electrodes 144. During operation, an actuated Q-switch 140 may convert linearly polarized light to circularly polarized light, for example.

According to further embodiments, an optically transmissive material such as an organic solid crystal may be characterized by a refractive index that influences the angle at which a beam of light will be redirected when it traverses the material. Sound waves may exert sufficient pressure to compress an OSC material and change its index of refraction. In an example Q-switched laser, an OSC-based Q-switch may exploit this acousto-optic phenomenon to switch a laser beam on and off.

Referring to FIG. 2, a solid-state laser 200 includes an active laser medium 210, such as a Nd:YAG crystal, located within a laser cavity defined by mirrors 252, 254. Also disposed along the optical axis of the laser 200, an organic solid crystal (OSC) Q-switch 240 includes alternating layers 243, 245 of mutually misoriented birefringent organic solid crystals.

RF power from source 260 may be pumped into the Q-switch organic solid crystal, deflecting the beam 211 away from one of the cavity mirrors, thus changing the *"*Q*"* or quality factor of the laser cavity in an amount effective to extinguish the lasing action. Rapidly switching the RF signal off and on switches the laser beam on and off. In this way, the laser can be made to emit short duration (ns) laser pulses at high repetition rates (e.g., kHz).

The pulses may have a high peak power because, while the system is not lasing, the active laser medium is being pumped to a higher level of gain. When the RF power is removed from the modulator, the refractive index of the crystal returns to its equilibrium value, such that the beam is no longer deflected, the cavity "Q" is restored, and a high peak pulse is emitted. The peak power may be controlled by the repetition rate where slower pulse rates typically produce higher power pulses because the active laser medium has a longer time between pulses to build gain.

According to further embodiments, a Q-switched laser may include a resonant cavity having a pair of reflective surfaces located along an optical axis, an active laser medium disposed along the optical axis within the resonant cavity, and a Q-switch disposed on the optical axis within the resonant cavity, where the Q-switch includes an organic solid crystal. In particular embodiments, the pair of reflective surfaces may respectively include a planar mirror and a non-planar output coupler, and the Q-switch may be located between the active laser medium and the output coupler.

In a related vein, a method may include forming first and second mirrors along an optical axis to define a resonant cavity enclosing an active laser medium, forming a modulator including an organic solid crystal along the optical axis within the resonant cavity, operatively coupling a power supply to the resonant cavity to pump the active laser medium, forming pulsed output light from the pumped active laser medium, actuating the modulator, and passing the pulsed output light through the actuated modulator to form a modulated light beam, such as an amplitude-modulated pulsed wave (AMPW) or linearly or circularly polarized light.

In some examples, actuating the modulator may include applying a voltage across the organic solid crystal along a direction orthogonal to the optical axis. In further examples, actuating the modulator may include applying an RF field to the organic solid crystal.

### Example Embodiments

Example 1: A device includes an active laser medium operative to emit spatially coherent light of a predetermined wavelength along an optical axis, first and second mirrors aligned with the optical axis and defining a resonant cavity enclosing the active laser medium, and a modulator including an organic solid crystal disposed along the optical axis between the first and second mirrors and configured to change a polarization state of the emitted light.

Example 2: The device of Example 1, where the active laser medium includes an ion-doped glass or an ion-doped crystalline solid.

Example 3: The device of any of Examples 1 and 2, where the first mirror includes a planar mirror having a reflectivity of at least approximately 95%.

Example 4: The device of any of Examples 1-3, where the second mirror includes a non-planar output coupler having a reflectivity of less than 100%.

Example 5: The device of any of Examples 1-4, where the first mirror includes a planar mirror having a reflectivity of at least approximately 95%, the second mirror includes an output coupler having a reflectivity of less than 100%, and the modulator is disposed between the active laser medium and the output coupler.

Example 6: The device of any of Examples 1-5, where the modulator includes an electro-optic modulator.

Example 7: The device of any of Examples 1-6, further including a primary electrode disposed over a first surface of the organic solid crystal, and a secondary electrode at least partially overlapping the primary electrode and disposed over a second surface of the organic solid crystal opposite to the first surface.

Example 8: The device of any of Examples 1-7, where the modulator includes an acousto-optic modulator.

Example 9: The device of any of Examples 1-8, where the organic solid crystal includes a non-centrosymmetric crystal.

Example 10: The device of any of Examples 1-9, where the organic solid crystal includes a birefringent crystal.

Example 11: The device of any of Examples 1-10, where the organic solid crystal includes a single crystal.

Example 12: The device of any of Examples 1-11, where the organic solid crystal includes a polyacene compound.

Example 13: The device of any of Examples 1-12, where the organic solid crystal includes a polycyclic aromatic hydrocarbon selected from anthracene, naphthalene, tetracene, and pentacene.

Example 14: A Q-switched laser includes a resonant cavity having a pair of reflective surfaces located along an optical axis, an active laser medium disposed along the optical axis within the resonant cavity, and a Q-switch disposed on the optical axis within the resonant cavity, where the Q-switch includes an organic solid crystal.

Example 15: The Q-switched laser of Example 14, where the pair of reflective surfaces respectively include a planar mirror and a non-planar output coupler, and the Q-switch is located between the active laser medium and the output coupler.

Example 16: A method includes forming first and second mirrors along an optical axis to define a resonant cavity enclosing an active laser medium, forming a modulator including an organic solid crystal along the optical axis within the resonant cavity, operatively coupling a power supply to the resonant cavity to pump the active laser medium, forming pulsed output light from the pumped active laser medium, actuating the modulator, and passing the pulsed output light through the actuated modulator to form a modulated light beam.

Example 17: The method of Example 16, where actuating the modulator includes applying a voltage across the organic solid crystal along a direction orthogonal to the optical axis.

Example 18: The method of Example 16, where actuating the modulator includes applying an RF field to the organic solid crystal.

Example 19: The method of any of Examples 16-18, where the modulated light beam includes an amplitude-modulated pulsed wave.

Example 20: The method of any of Examples 16-19, where the modulated light includes circularly polarized light.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (e.g., augmented-reality system 300 in FIG. 3) or that visually immerses a user in an artificial reality (e.g., virtual-reality system 400 in FIG. 4). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 3, augmented-reality system 300 may include an eyewear device 302 with a frame 310 configured to hold a left display device 315(A) and a right display device 315(B) in front of a user's eyes. Display devices 315(A) and 315(B) may act together or independently to present an image or series of images to a user. While augmented-reality system 300 includes two displays, embodiments of this disclosure may be implemented in augmented-reality systems with a single NED or more than two NEDs.

In some embodiments, augmented-reality system 300 may include one or more sensors, such as sensor 340. Sensor 340 may generate measurement signals in response to motion of augmented-reality system 300 and may be located on substantially any portion of frame 310. Sensor 340 may represent a position sensor, an inertial measurement unit (IMU), a depth camera assembly, a structured light emitter and/or detector, or any combination thereof. In some embodiments, augmented-reality system 300 may or may not include sensor 340 or may include more than one sensor. In embodiments in which sensor 340 includes an IMU, the IMU may generate calibration data based on measurement signals from sensor 340. Examples of sensor 340 may include, without limitation, accelerometers, gyroscopes, magnetometers, other suitable types of sensors that detect motion, sensors used for error correction of the IMU, or some combination thereof.

Augmented-reality system 300 may also include a microphone array with a plurality of acoustic transducers 320(A)-320(J), referred to collectively as acoustic transducers 320. Acoustic transducers 320 may be transducers that detect air pressure variations induced by sound waves. Each acoustic transducer 320 may be configured to detect sound and convert the detected sound into an electronic format (e.g., an analog or digital format). The microphone array in FIG. 3 may include, for example, ten acoustic transducers: 320(A) and 320(B), which may be designed to be placed inside a corresponding ear of the user, acoustic transducers 320(C), 320(D), 320(E), 320(F), 320(G), and 320(H), which may be positioned at various locations on frame 310, and/or acoustic transducers 320(I) and 320(J), which may be positioned on a corresponding neckband 305.

In some embodiments, one or more of acoustic transducers 320(A)-(F) may be used as output transducers (e.g., speakers). For example, acoustic transducers 320(A) and/or 320(B) may be earbuds or any other suitable type of headphone or speaker.

The configuration of acoustic transducers 320 of the microphone array may vary. While augmented-reality system 300 is shown in FIG. 3 as having ten acoustic transducers 320, the number of acoustic transducers 320 may be greater or less than ten. In some embodiments, using higher numbers of acoustic transducers 320 may increase the amount of audio information collected and/or the sensitivity and accuracy of the audio information. In contrast, using a lower number of acoustic transducers 320 may decrease the computing power required by an associated controller 350 to process the collected audio information. In addition, the position of each acoustic transducer 320 of the microphone array may vary. For example, the position of an acoustic transducer 320 may include a defined position on the user, a defined coordinate on frame 310, an orientation associated with each acoustic transducer 320, or some combination thereof.

Acoustic transducers 320(A) and 320(B) may be positioned on different parts of the user's ear, such as behind the pinna, behind the tragus, and/or within the auricle or fossa. Or, there may be additional acoustic transducers 320 on or surrounding the ear in addition to acoustic transducers 320 inside the ear canal. Having an acoustic transducer 320 positioned next to an ear canal of a user may enable the microphone array to collect information on how sounds arrive at the ear canal. By positioning at least two of acoustic transducers 320 on either side of a user's head (e.g., as binaural microphones), augmented-reality device 300 may simulate binaural hearing and capture a 3D stereo sound field around about a user's head. In some embodiments, acoustic transducers 320(A) and 320(B) may be connected to augmented-reality system 300 via a wired connection 330, and in other embodiments acoustic transducers 320(A) and 320(B) may be connected to augmented-reality system 300 via a wireless connection (e.g., a Bluetooth connection). In still other embodiments, acoustic transducers 320(A) and 320(B) may not be used at all in conjunction with augmented-reality system 300.

Acoustic transducers 320 on frame 310 may be positioned along the length of the temples, across the bridge, above or below display devices 315(A) and 315(B), or some combination thereof. Acoustic transducers 320 may be oriented such that the microphone array is able to detect sounds in a wide range of directions surrounding the user wearing the augmented-reality system 300. In some embodiments, an optimization process may be performed during manufacturing of augmented-reality system 300 to determine relative positioning of each acoustic transducer 320 in the microphone array.

In some examples, augmented-reality system 300 may include or be connected to an external device (e.g., a paired device), such as neckband 305. Neckband 305 generally represents any type or form of paired device. Thus, the following discussion of neckband 305 may also apply to various other paired devices, such as charging cases, smart watches, smart phones, wrist bands, other wearable devices, hand-held controllers, tablet computers, laptop computers, other external compute devices, etc.

As shown, neckband 305 may be coupled to eyewear device 302 via one or more connectors. The connectors may be wired or wireless and may include electrical and/or non-electrical (e.g., structural) components. In some cases, eyewear device 302 and neckband 305 may operate independently without any wired or wireless connection between them. While FIG. 3 illustrates the components of eyewear device 302 and neckband 305 in example locations on eyewear device 302 and neckband 305, the components may be located elsewhere and/or distributed differently on eyewear device 302 and/or neckband 305. In some embodiments, the components of eyewear device 302 and neckband 305 may be located on one or more additional peripheral devices paired with eyewear device 302, neckband 305, or some combination thereof.

Pairing external devices, such as neckband 305, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 300 may be provided by a paired device or shared between a paired device and an eyewear device, thus reducing the weight, heat profile, and form factor of the eyewear device overall while still retaining desired functionality. For example, neckband 305 may allow components that would otherwise be included on an eyewear device to be included in neckband 305 since users may tolerate a heavier weight load on their shoulders than they would tolerate on their heads. Neckband 305 may also have a larger surface area over which to diffuse and disperse heat to the ambient environment. Thus, neckband 305 may allow for greater battery and computation capacity than might otherwise have been possible on a stand-alone eyewear device. Since weight carried in neckband 305 may be less invasive to a user than weight carried in eyewear device 302, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 305 may be communicatively coupled with eyewear device 302 and/or to other devices. These other devices may provide certain functions (e.g., tracking, localizing, depth mapping, processing, storage, etc.) to augmented-reality system 300. In the embodiment of FIG. 3, neckband 305 may include two acoustic transducers (e.g., 320(I) and 320(J)) that are part of the microphone array (or potentially form their own microphone subarray). Neckband 305 may also include a controller 325 and a power source 335.

Acoustic transducers 320(I) and 320(J) of neckband 305 may be configured to detect sound and convert the detected sound into an electronic format (analog or digital). In the embodiment of FIG. 3, acoustic transducers 320(I) and 320(J) may be positioned on neckband 305, thereby increasing the distance between the neckband acoustic transducers 320(I) and 320(J) and other acoustic transducers 320 positioned on eyewear device 302. In some cases, increasing the distance between acoustic transducers 320 of the microphone array may improve the accuracy of beamforming performed via the microphone array. For example, if a sound is detected by acoustic transducers 320(C) and 320(D) and the distance between acoustic transducers 320(C) and 320(D) is greater than, e.g., the distance between acoustic transducers 320(D) and 320(E), the determined source location of the detected sound may be more accurate than if the sound had been detected by acoustic transducers 320(D) and 320(E).

Controller 325 of neckband 305 may process information generated by the sensors on neckband 305 and/or augmented-reality system 300. For example, controller 325 may process information from the microphone array that describes sounds detected by the microphone array. For each detected sound, controller 325 may perform a direction-of-arrival (DOA) estimation to estimate a direction from which the detected sound arrived at the microphone array. As the microphone array detects sounds, controller 325 may populate an audio data set with the information. In embodiments in which augmented-reality system 300 includes an inertial measurement unit, controller 325 may compute all inertial and spatial calculations from the IMU located on eyewear device 302. A connector may convey information between augmented-reality system 300 and neckband 305 and between augmented-reality system 300 and controller 325. The information may be in the form of optical data, electrical data, wireless data, or any other transmittable data form. Moving the processing of information generated by augmented-reality system 300 to neckband 305 may reduce weight and heat in eyewear device 302, making it more comfortable to the user.

Power source 335 in neckband 305 may provide power to eyewear device 302 and/or to neckband 305. Power source 335 may include, without limitation, lithium ion batteries, lithium-polymer batteries, primary lithium batteries, alkaline batteries, or any other form of power storage. In some cases, power source 335 may be a wired power source. Including power source 335 on neckband 305 instead of on eyewear device 302 may help better distribute the weight and heat generated by power source 335.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 400 in FIG. 4, that mostly or completely covers a user's field of view. Virtual-reality system 400 may include a front rigid body 402 and a band 404 shaped to fit around a user's head. Virtual-reality system 400 may also include output audio transducers 406(A) and 406(B). Furthermore, while not shown in FIG. 4, front rigid body 402 may include one or more electronic elements, including one or more electronic displays, one or more inertial measurement units (IMUs), one or more tracking emitters or detectors, and/or any other suitable device or system for creating an artificial reality experience.

Artificial-reality systems may include a variety of types of visual feedback mechanisms. For example, display devices in augmented-reality system 300 and/or virtual-reality system 400 may include one or more liquid crystal displays (LCDs), light emitting diode (LED) displays, organic LED (OLED) displays, digital light project (DLP) micro-displays, liquid crystal on silicon (LCoS) micro-displays, and/or any other suitable type of display screen. Artificial-reality systems may include a single display screen for both eyes or may provide a display screen for each eye, which may allow for additional flexibility for varifocal adjustments or for correcting a user's refractive error. Some artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some artificial-reality systems may include one or more projection systems. For example, display devices in augmented-reality system 300 and/or virtual-reality system 400 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

Artificial-reality systems may also include various types of computer vision components and subsystems. For example, augmented-reality system 300 and/or virtual-reality system 400 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

Artificial-reality systems may also include one or more input and/or output audio transducers. In the examples shown in FIG. 4, output audio transducers 406(A) and 406(B) may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

While not shown in FIG. 3, artificial-reality systems may include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present disclosure. The embodiments disclosed herein should be considered in all respects illustrative and not restrictive. Reference should be made to any claims appended hereto and their equivalents in determining the scope of the present disclosure.

Unless otherwise noted, the terms "connected to" and "coupled to" (and their derivatives), as used in the specification and/or claims, are to be construed as permitting both direct and indirect (i.e., via other elements or components) connection. In addition, the terms "a" or "an," as used in the specification and/or claims, are to be construed as meaning "at least one of." Finally, for ease of use, the terms "including" and "having" (and their derivatives), as used in the specification and/or claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to 50±5, i.e., values within the range 45 to 55.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to an organic solid crystal that comprises or includes anthracene include embodiments where an organic solid crystal consists essentially of anthracene and embodiments where an organic solid crystal consists of anthracene.

## Claims

1. A device comprising:
an active laser medium operative to emit spatially coherent light of a predetermined wavelength along an optical axis;
first and second mirrors aligned with the optical axis and defining a resonant cavity enclosing the active laser medium; and
a modulator comprising an organic solid crystal disposed along the optical axis between the first and second mirrors and configured to change a polarization state of the emitted light.

2. The device of claim 1, wherein the active laser medium comprises an ion-doped glass or an ion-doped crystalline solid.

3. The device of claim 1 or claim 2, wherein the first mirror comprises a planar mirror having a reflectivity of at least approximately 95%.

4. The device of claim 1, claim 2 or claim 3, wherein the second mirror comprises a non-planar output coupler having a reflectivity of less than 100%.

5. The device of any one of the preceding claims, wherein the first mirror comprises a planar mirror having a reflectivity of at least approximately 95%, the second mirror comprises an output coupler having a reflectivity of less than 100%, and the modulator is disposed between the active laser medium and the output coupler.

6. The device of any one of the preceding claims, wherein the modulator comprises an electro-optic modulator.

7. The device of any one of the preceding claims, further comprising:
a primary electrode disposed over a first surface of the organic solid crystal; and
a secondary electrode at least partially overlapping the primary electrode and disposed over a second surface of the organic solid crystal opposite to the first surface.

8. The device of any one of the preceding claims, wherein the modulator comprises an acousto-optic modulator.

9. The device of any one of the preceding claims, wherein the organic solid crystal comprises one or more of:
i.a non-centrosymmetric crystal;
ii. a birefringent crystal;
iii. a single crystal;
iv. a polyacene compound;
v. a polycyclic aromatic hydrocarbon selected from the group consisting of anthracene, naphthalene, tetracene, and pentacene.

10. A Q-switched laser comprising:
a resonant cavity having a pair of reflective surfaces located along an optical axis;
an active laser medium disposed along the optical axis within the resonant cavity; and
a Q-switch disposed on the optical axis within the resonant cavity, wherein the Q-switch comprises an organic solid crystal.

11. The Q-switched laser of claim 10, wherein the pair of reflective surfaces respectively comprise a planar mirror and a non-planar output coupler, and the Q-switch is located between the active laser medium and the output coupler.

12. A method comprising:
forming first and second mirrors along an optical axis to define a resonant cavity enclosing an active laser medium;
forming a modulator comprising an organic solid crystal along the optical axis within the resonant cavity;
operatively coupling a power supply to the resonant cavity to pump the active laser medium;
forming pulsed output light from the pumped active laser medium;
actuating the modulator; and
passing the pulsed output light through the actuated modulator to form a modulated light beam.

13. The method of claim 12, wherein actuating the modulator comprises applying a voltage across the organic solid crystal along a direction orthogonal to the optical axis.

14. The method of claim 12 or claim 13, wherein actuating the modulator comprises applying an RF field to the organic solid crystal.

15. The method of claim 12, claim 13 or claim 14, wherein the modulated light beam comprises an amplitude-modulated pulsed wave; and/or preferably
wherein the modulated light comprises circularly polarized light.
